# EUROPEAN PATENT APPLICATION

(11) **EP 0 574 648 A1**
(43) Date of publication of application: **22.12.1993**
(21) Application number: 92830371.8
(22) Date of filing: 10.07.1992
(51) Int. Cl.: A47G 11/00

(54) **A multipurpose tablecloth**

(30) Priority: 19.06.1992 IT MI920625 U
(71) Applicant: F.LLI COLOMBO S.p.A., I-20146 Milano (IT)
(72) Inventor: Colombo, Piercarlo, Castellanza (Varese) (IT)
(74) Representative: Righetti, Giuseppe

(57) **Abstract**

A multipurpose tablecloth comprises a plastics layer (2) and a textile fibre layer (3) irremovably engaged with each other and each exhibiting an exposed surface (2b, 3b) printed in such a way as to define cloth faces that are differentiated from each other as regards their respective functions.

## Description

The present invention relates to a multipurpose tablecloth.

It is known that beside traditional tablecloths having ornamental patterns printed or embroidered thereon, tablecloths made of plastic material such as polyvinyl chloride (PVC) printed on one or both faces following conventional techniques known per se are becoming increasingly more widely spread above all on account of the practical use they offer for laying everyday tables.

In order to make said plastics tablecloths still more appreciated, making them more agreeable to the touch and of better appearance as well as stronger, often one layer consisting of interlaced textile fibres forming a true fabric or uninterlaced textile fibres defining a product known as "a nonwoven fabric", is coupled with the mat and printed plastics layer.

It is also known to make tablecloths of the same type as above described, that is obtained by coupling a plastics layer with a layer of textile fibres, in which however the first layer is substantially transparent and the second layer is printed on its surface to be coupled with the plastics layer. In this way a fabric tablecloth is made which at its exposed face is covered with a protection waterproof layer enabling the ornamental patterns printed on the fabric layer to be appreciated.

All types of tablecloths briefly described above however suffer from important restrictions and drawbacks.

In fact although tablecloths made of plastics alone or plastic material coupled with a textile fibre layer have the great advantage of not being subjected to get stained, which on the contrary happens with traditional tablecloths made of textile fibres, they are not accepted by many people as they cannot be considered aesthetic items adapted to make a good show among the furniture of a dining room for example.

Consequently after their use, that is after each meal, they are usually removed from the table and often replaced by tablecloths or table covers made of fabric, which undoubtly are aesthetically better.

When requirements are as above stated it is apparent that for each table at least two items must be available, that is a tablecloth completely or partly made of plastic material and a tablecloth made of fabric, to be alternately stowed in an appropriate drawer or cupboard compartment.

Therefore it is not only necessary to have room enough to stow the tablecloth or tablecloths that are not used at the moment, but each time that a change occurs, it is also necessary to fold said tablecloths: obviously this operation involves a certain working activity and a non negligible loss of time.

Under this situation the general aim of the present invention is to devise a multipurpose tablecloth capable of substantially eliminating the above drawbacks.

Within this general aim it is an important object of the invention to devise a tablecloth capable of performing both a practical function of stain-resistant cover for a table and an ornamental function offering excellent aesthetic results.

Another important object of the invention is to devise a multipurpose tablecloth capable of eliminating the need of finding place for stowing said tablecloth and greatly reducing time and work necessary for passing from a practical function of stain-resistant cover to an ornamental function, and vice-versa.

The above objects are substantially achieved by a multipurpose tablecloth characterized in that it comprises the combination of one layer of plastic material and one layer of textile fibres irremovably engaged with each other at the respective coupling surfaces, said plastics layer and textile fibre layer each having on its side opposite that of the corresponding coupling surface, an external surface printed with ornamental patterns, said outer printed surfaces defining faces of said tablecloth that are differentiated from each other as regards their respective functions.

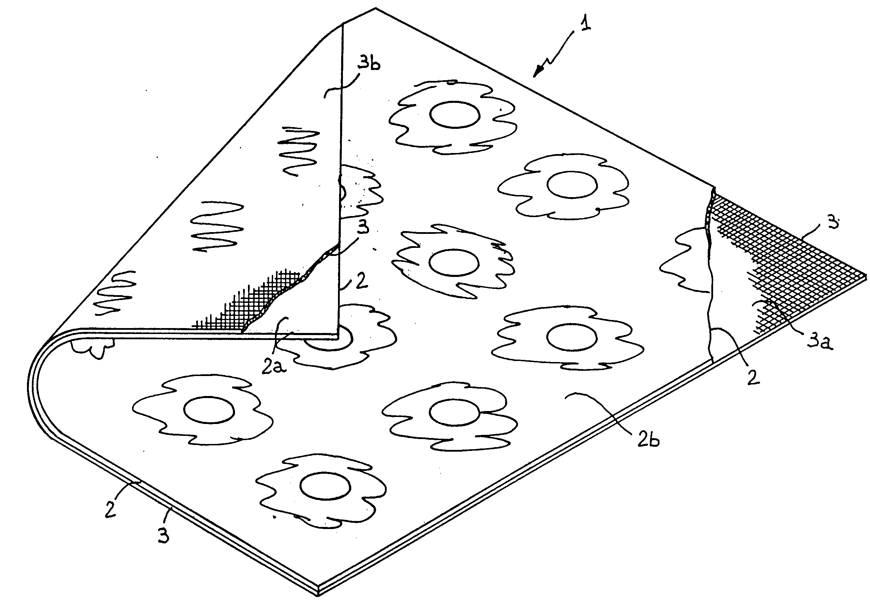

The description of a preferred embodiment of a multipurpose tablecloth in accordance with the invention is now given by way of non-limiting example with reference to the drawing in which the only figure is a perspective view of the tablecloth of the invention, showing a folded back border.

Referring to the drawing, the multipurpose tablecloth in accordance with the invention is generally denoted by 1.

It comprises a layer of plastic material 2 and a layer of textile fibres 3 irremovably engaged with each other at the respective coupling surfaces 2a and 3a, by techniques known per se and conventional.

The plastic material layer 2 has one eternal surface 2b opposite to the corresponding coupling surface 2a, which is printed with ornamental patterns.

Likewise, the textile fibre layer 3 has a second external surface 3b opposite to the corresponding coupling surface 3a, which is printed with ornamental patterns too.

The exposed surfaces 2b and 3b define differentiated surfaces of the tablecloth 1 as regards the functions they accomplish. In more detail, the eternal surface 2b of the plastic material layer 2 is intended to be the really visible face, that is the face turned upwardly, of the tablecloth laid on the table for the purpose of accomplishing a stain-resistant function.

In turn, the external surface 3b of the textile fibre layer 3 is intended to be the really visible face of the tablecloth 1 for the purpose of accomplishing a valuable ornamental function.

For passing from one function to the other, it is sufficient to turn the tablecloth over, that is lay against the table the eternal surface that at the moment one does not wish to utilize.

The plastic material layer 2 is preferably made of mat polyvinyl chroride, whereas the textile fibre layer can be made of a real fabric that is defined by interlaced weft and warp yarns, or a nonwoven fabric, depending on whether one wishes to achieve a more or less refined aesthetic effect.

The invention achieves important advantages.

First of all the multipurpose tablecloth of the invention can be managed very rapidly and without any effort as an aesthetic cover for a table or as a real stain-resistant tablecloth.

In addition, it need not be stowed so that specific storage spaces are not required.

Finally its price is competitive because a single item can fulfill the functions that only two items are presently capable of performing.

All of the details may be replaced by technically equivalent elements and in practice, the materials used can be of any type and the sizes of any magnitude as required.

## Claims

1. A multipurpose tablecloth characterized in that it comprises the combination of one layer of plastic material (2) and one layer of textile fibres (3) irremovably engaged with each other at the respective coupling surfaces (2a, 3a), said plastics layer (2) and textile fibre layer (3) each having on its side opposite that of the corresponding coupling surface (2a, 3a), an external surface (2b, 3b) printed with ornamental patterns, said outer printed surfaces (2b, 3b) defining faces of said tablecloth that are differentiated from each other as regards their respective functions.

2. A tablecloth according to claim 1, characterized in that said plastics layer (2) is made of polyvinyl chloride and said textile fibre layer (3) is made of a fabric obtained through the interlacing of weft and warp yarns.

3. A tablecloth according to claim 1, characterized in that said plastics layer (2) is made of polyvinyl chloride and said textile fibre layer (3) is made of nonwoven fabric.
